(19) Europäisches Patentamt
European Patent Office
Office européen des brevets

(11) **EP 1 272 429 B1**

(12) **EUROPÄISCHE PATENTSCHRIFT**

(45) Veröffentlichungstag und Bekanntmachung des Hinweises auf die Patenterteilung:
**16.06.2010 Patentblatt 2010/24**

(21) Anmeldenummer: **01938061.7**

(22) Anmeldetag: **28.03.2001**

(51) Int Cl.:
*C01G 9/00* *(2006.01)*　　*B23K 35/36* *(2006.01)*

(86) Internationale Anmeldenummer:
**PCT/EP2001/003509**

(87) Internationale Veröffentlichungsnummer:
**WO 2001/074715 (11.10.2001 Gazette 2001/41)**

(54) **ALKALIMETALLFLUORZINKAT UND SEINE HERSTELLUNG**

ALKALI METAL FLUORO ZINCATE AND THE PRODUCTION THEREOF

FLUOROZINCATES DE METAUX ALCALINS ET LEUR FABRICATION

(84) Benannte Vertragsstaaten:
**DE GB**

(30) Priorität: **03.04.2000 DE 10016257**

(43) Veröffentlichungstag der Anmeldung:
**08.01.2003 Patentblatt 2003/02**

(73) Patentinhaber: **Solvay Fluor GmbH**
**30173 Hannover (DE)**

(72) Erfinder:
• **SESEKE-KOYRO, Ulrich**
**30916 Isernhagen (DE)**
• **BECKER, Andreas**
**29331 Lachendorf (DE)**
• **FREHSE, Joachim**
**30625 Hannover (DE)**

(74) Vertreter: **Jacques, Philippe et al**
**Solvay S.A.**
**Département de la Propriété Industrielle**
**Rue de Ransbeek, 310**
**1120 Bruxelles (BE)**

(56) Entgegenhaltungen:
**WO-A-99/48641**

• **PATENT ABSTRACTS OF JAPAN vol. 011, no. 160 (M-592), 23. Mai 1987 (1987-05-23) & JP 61 293699 A (TOYOTA CENTRAL RES & DEV LAB INC), 24. Dezember 1986 (1986-12-24)**
• **R.J. MEYER: "Gmelins Handbuch der Anorganischen Chemie, 8. Auflage, Band 32" 1924 , VERLAG CHEMIE , LEIPZIG BERLIN XP002176958 Seite 303**

EP 1 272 429 B1

## Beschreibung

Die Erfindung bezieht sich auf ein Verfahren zur Herstellung von Alkalimetallfluorzinkat, das erhaltene Produkt und seine Verwendung.

Alkalimetallfluorzinkate wie Cäsiumfluorzinkat und besonders Kaliumfluorzinkat können als Flussmittel für das Verlöten von Aluminiumbauteilen und Bauteilen aus Aluminiumlegierungen verwendet werden. Dabei wirken diese Verbindungen nicht nur als Flussmittel, sondern sie bewirken auch eine Vergütung der Oberfläche, indem Zink auf der Oberfläche der Bauteile abgeschieden wird. Die Fluorzinkate können auch zusammen mit Alkalifluoraluminaten, beispielsweise Kaliumfluoraluminat und/oder Cäsiumfluoraluminat, eingesetzt werden. Diese Verbindungen wirken ebenfalls als Flussmittel beim Aluminiumlöten. Die WO 99/48641, die der deutschen Offenlegungsschrift DE 19913 111 A1 entspricht, offenbart derartige Flussmittel und ihre Anwendung zum Aluminiumlöten, durch Reaktion von Alkalifluoriden und Zinkfluorid in wässriger Lösung, durch Umsetzung von wässrigen Lösungen von Alkalimetallbifluoriden mit Zinkoxid oder durch Umsalzen anderer Alkalimetall- bzw. Zinksalze mit HF oder Alkalimetall- oder Ammoniumbifluorid.

Aufgabe der vorliegenden Erfindung ist es, ein Verfahren zur Herstellung von Alkalimetallfluorzinkaten anzugeben, mit welchem sich Produkte mit definierten Kornverteilungsbereichen erzielen lassen. Aufgabe der vorliegenden Erfindung ist es auch, ein Alkalimetallfluorzinkat anzugeben, welches sich besonders gut als Flussmittel oder Flussmittelbestandteil eignet. Diese Aufgabe wird durch das erfindungsgemäße Produkt und das entsprechende Herstellverfahren gelöst.

Die Erfindung beruht auf der Erkenntnis, dass Alkalimetallfluorzinkat mit bestimmten Eigenschaften bezüglich der Korngröße in Abhängigkeit von der Art der Ausgangsverbindungen und der Reihenfolge, in welcher man sie miteinander kontaktiert, hergestellt werden kann.

Das erfindungsgemäße Verfahren zur Herstellung von Alkalimetallfluorzinkat aus Alkalimetallhydroxid, Zinkoxid und Alkalimetallfluorid oder Fluorwasserstoff in wäßriger Phase, ist dadurch gekennzeichnet, dass man zur Herstellung von mittelfeinem Alkalimetallfluorzinkat mit einem Kornspektrum, bei welchem 50 % der Teilchen einen Durchmesser von <11 $\mu$m aufweisen, Fluorwasserstoff und Zinkoxid miteinander vermischt und Alkalimetallhydroxid zugibt.

Anstelle von Zinkoxid können auch andere Zinkverbindungen z. B. Zinkhydroxid, Zinkcarbonat oder Zinkchlorid, eingesetzt werden, Zinkoxid ist bevorzugt.

Der Begriff "mittelfein" bedeutet im Rahmen der vorliegenden Erfindung, dass 50 % der Partikel des hergestellten Materials eine Korngröße von weniger als 11 $\mu$m und 90 % eine Korngröße von weniger als 27 $\mu$m aufweisen. Die übrigen Teilchen liegen bei oder oberhalb der genannten Werte. Bevorzugt bedeutet der Begriff, dass 50 % aller hergestellten Teilchen eine Korngröße von weniger als 10 $\mu$m und 90 % aller Teilchen eine Korngröße von weniger als 26 $\mu$m aufweisen. Die Partikelanalyse wird nach dem Prinzip der Laserbeugung bestimmt.

Beim Verfahren der Erfindung wird mittelfeines Alkalimetallfluorzinkat hergestellt. Fluorwasserstoff und Alkalihydroxid werden bevorzugt als wäßrige Lösung eingesetzt. Die bevorzugten Konzentrationen entsprechen denjenigen der Herstellung von feinteiligem Alkalimetallfluorzinkat. Alkali steht bevorzugt für Kalium. Fluorwasserstoff und Zinkoxid, welches als Precursor in Form von z. B. Zinkcarbonat eingesetzt werden kann, werden im Temperaturbereich von 20 (Umgebungstemperatur) bis 95°C umgesetzt, die anschließende Umsetzung mit Hydroxid erfolgt vorzugsweise bei einer Temperatur im Bereich von 70 bis 90°C.

Im Gegensatz zum erfindungsgemäßen Verfahren erfolgt eine Herstellung von feinteiligem Alkalimetallfluorzinkat, indem man Alkalimetallhydroxid und Zinkoxid zu einer Suspension vermischt und Fluorwasserstoff zugibt. Der Begriff "feinteilig" bezeichnet ein Alkalimetallfluorzinkat, bei welchem 50 % der Teilchen eine Korngröße kleiner als 5 $\mu$m aufweisen und 90 % der Teilchen eine Korngröße von weniger als 9 $\mu$m; die übrigen Teilchen sind dann gleich oder größer als die angegebenen Werte. Bevorzugt stellt man feinteiliges Alkalimetallfluorzinkat her, bei welchem 50 % aller Teilchen einen Durchmesser von <3,8 $\mu$m und 90 % aller Teilchen einen Durchmesser von <8 $\mu$m aufweisen. Die Größenbestimmung erfolgt mittels Laserbeugung.

Das feinteilige Alkalimetallfluorzinkat wird vorzugsweise dann abgetrennt und getrocknet. Überraschenderweise ist das erhaltene Produkt feinteiliger als jenes Produkt, welches nach den in der deutschen Offenlegungsschrift 199 13 111 beschriebenen Verfahren anfällt. Beispielsweise läßt sich so Alkalimetallfluorzinkat herstellen, welches ein Kornspektrum aufweist, bei welchem 50 % aller Teilchen einen Durchmesser von <5 $\mu$m aufweisen (gemessen durch Laserbeugung). Versuche haben gezeigt, dass z. B. Kaliumfluorzinkat mit noch feinerem Kornspektrum herstellbar ist (beispielsweise weisen 50 % der Teilchen einen Durchmesser von weniger als 3,3 $\mu$m auf).

Bevorzugt geht man von Kaliumhydroxid als Alkalihydroxid aus und stellt Kaliumfluorzinkat her. Dabei wird das Kaliumhydroxid vorzugsweise in Form einer wäßrigen Kalilauge eingesetzt. Die Konzentration an KOH in dieser Kalilauge liegt vorteilhaft im Bereich von 10 bis 50 Ges.-%. Besonders bevorzugt stellt man $KZnF_3$ her. Hierzu setzt man Kaliumhydroxid, Zinkoxid und Fluorwasserstoff vorzugsweise in solchen Mengen ein, dass das Atomverhältnis von K:Zn im Bereich von 1:1 $\pm$0,05 liegt und das Atomverhältnis von (K+Zn):F im Bereich von 1:3 $\pm$0,05 liegt. Das Zinkoxid kann auch als Precursor, z. B. als $ZnCO_3$ oder $ZnCl_2$, eingesetzt werden.

Es bildet sich eine Suspension, die dann mit Fluorwasserstoff weiter umgesetzt wird zum gewünschten Alkalimetallfluorzinkat. Es wird vorzugsweise eine Flußsäure mit 10 bis 99 Gew.-% HF eingesetzt, vorzugsweise 20 bis 40 Gew.- % HF.

Die Herstellung der Suspension aus Alkalimetallhydroxid und Zinkoxid wird vorzugsweise bei einer Temperatur im Bereich von 15 bis 85°C, insbesondere bei Umgebungstemperatur (ca. 20°C) durchgeführt. Die Umsetzung des gebildeten Zwischenproduktes mit Fluorwasserstoff führt man vorteilhaft bei einer Temperatur im Bereich von ca, 20°C bis 90°C durch.

Im Gegensatz zum erfindungsgemäßen Verfahren erfolgt eine Herstellung von grobteiligem Alkalimetallfluorzinkat, indem man Fluorwasserstoff und Zinkoxid miteinander vermischt und Alkalimetallfluorid zugibt. Der Begriff "grobteilig" bedeutet, dass 50 % aller Teilchen eine Korngröße von weniger als 22 $\mu$m und 90 % eine Korngröße von weniger als 40 $\mu$m aufweisen. Bevorzugt bedeutet der Begriff "grobteilig", dass 50 % aller Teilchen eine Korngröße von weniger als 21 $\mu$m und 90 % eine Korngröße von weniger als 39 $\mu$m aufweisen. Die übrigen Teilchen entsprechen der angegebenen Größe oder liegen darüber.

Alkalimetallhydroxid, Fluorwasserstoff und Alkalimetallfluorid werden zweckmäßig in Form einer wäßrigen Lösung eingesetzt. Bevorzugtes Alkalimetall ist Kaliumhydroxid.

Für die Herstellung von grobem Alkalimetallfluorzinkat setzt man zunächst Fluorwasserstoff mit Zinkoxid um und gibt dann Alkalimetallfluorid zu. Auch hier steht Alkali bevorzugt für Kalium. Fluorwasserstoff wird vorzugsweise in wäßriger Lösung eingesetzt, die bevorzugte Konzentration ist wie in der ersten Variante. Das Alkalimetallfluorid wird ebenfalls vorzugsweise in wäßriger Lösung eingesetzt. Die bevorzugte Konzentration liegt im Bereich von 25 bis 40 Gew.- % insbesondere 28 bis 32 Gew.- %. Die Temperatur der ersten Umsetzungsstufe liegt im gleichen Bereich wie in Variante 1 und Variante 2. Der Zusatz von Alkalimetallfluorid erfolgt dann bevorzugt bei einer Temperatur von 70 bis 90°C.

Ein weiterer Gegenstand der Erfindung ist das nach dem erfindungsgemäßen Verfahren erhältliche mittelfeine Alkalimetallfluorzinkat mit den weiter oben angegebenen Parametern bezüglich der Korngröße. Bevorzugt ist Kalium-fluorzinkat insbesondere der Formel $KZnF_3$. Dabei liegen die Korngrößen des des mittelfeinen Produkts im Bereich von 6 bis 11 $\mu$m.

Wenn man ein Gemisch von Kaliumhydroxid und Rubidium-, Lithium- oder Cäsiumhydroxid einsetzt, lassen sich entsprechend gemischte Fluorzinkate vom Typ $Alkali_{1-x}Alkali'_xZnF_3$ (x < 1 und Alkali ≠ Alkali) erzeugen. Auch diese gemischten Fluorzinkate sind Gegenstand der Erfindung. Im Falle von gemischten Fluorzinkaten ist Kaliumcäsiumfluorzinkat (wobei das Verhältnis von Kalium zu Cäsium beliebig ist) bevorzugt.

Das erfindungsgemäße Fluorzinkat eignet sich besonders zur Anwendung als Flussmittel beim Löten von Aluminium und Aluminiumlegierungen. Es wird dann in bekannter Weise eingesetzt, wie beispielsweise in der deutschen Offenlegungsschrift 199 13 111 offenbart. Das feinteilige Produkt eignet sich besonders zur Applikation durch Naßbefluxung, grobteiliges Produkt für Trockenbefluxung. Das mittelfeine Produkt eignet sich für beide Zwecke gut. Natürlich kann man auch Mischungen mit vorbestimmten Eigenschaften herstellen.

Sie eignen sich auch als Lötflussmittelzusatz zu anderen Flussmitteln, insbesondere als Flussmittelzusatz zu Kaliumfluoraluminat und Cäsiumfluoraluminat.

Das erfindungsgemäße Alkalimetallfluorzinkat kann selbstverständlich auch mit auf herkömmliche Weise hergestelltem Alkalimetallfluorzinkat vermischt werden, um Eigenschaften wie Suspendierbarkeit oder Fluidisierbarkeit zu beeinflussen.

Es kann beispielsweise vermischt mit Lotmetall eingesetzt werden oder mit einem Vorläufer für das Lotmetall, beispielsweise mit 5 - 95 Gew.- %, bezogen auf das gesamte Flussmittel, Alkalimetallfluorsilikat wie Kaliumhexafluorsilikat, siehe EP-A 810 057 und DE-OS 196 36 897, oder mit 10 bis 80 Gew.- % mit Kupfer, Zink oder Germanium, die mit Aluminium ein Eutektikum bilden, siehe US-A 5,190,596.

Es kann auch im Gemisch mit Alkalifluoraluminaten eingesetzt werden, z. B. mit $KAlF_4$ oder $K_2AlF_5$, wie analog in der DE-OS 199 13 111 beschrieben, oder mit Cäsiumfluoraluminat. Das letztere ist günstig für Al-Legierungen mit größerem Mg-Anteil.

Weitere Hilfsstoffe können enthalten sein, z. B. wie in der DE-OS 199 13 111, Seite 3 beschrieben. Beispielsweise kann Bindemittel oder Dispergierhilfsmittel enthalten sein.

Das Flussmittel kann in bekannter Weise auf die zu verbindenden Bauteile aus Aluminium oder Aluminiumlegierungen aufgebracht werden. Die Trockenapplikation auf Basis von elektrostatischer Sprühtechnologie ist aufgrund der guten Fluidisierungseigenschaften der Flussmittel möglich Alternativ kann man das Flussmittel in Form von wäßrigen bzw. organischen Suspensionen oder als Paste auf die zu verbindenden Werkstoffe applizieren. Wäßrige oder organische Aufschlämmungen enthalten zweckmäßig 15 bis 75 Gew.- % des Flussmittels. Man kann auch Suspensionen des Flussmittels in organischen Flüssigkeiten, zweckmäßig die üblicherweise als organische Lösungsmittel verwendete Substanzen wie Alkohole, insbesondere Methanol, Ethanol, Propanol oder Isopropanol sowie Polyole einsetzen. Andere organische Flüssigkeiten ("carrier") sind Ether, z, B. Diethylenglycolmonobutylether, Ketone wie Aceton, Ester von Alkoholen, Diolen oder Polyolen. Binder für die Anwendung als Paste ist z. B. Ethylcellulose. Mittels Filmbildnern, gewöhnlich Polymere, die in organischen Lösemittel, z. B. Aceton, löslich sind, können Flussmittel mit gegebenenfalls Lot oder Lot-Vorstufe auf das Werkstück aufgebracht werden und ergeben nach dem Verdampfen des Lösemittels einen fest haftenden Film. Geeignete Polymere sind z. B. (Meth-)Acrylate. Beim Löten verdampft der Filmbildner dann.

Bei der Anwendung kann das Lotmetall, sofern benötigt, im Flussmittel enthalten sein (als beigemischtes Pulver), es kann als Plattierung auf den zu verlötenden Bauteilen bereits aufgebraucht sein oder zusätzlich zum Flussmittel aufgebracht werden.

Die Löttemperatur ist abhängig vom verwendeten Lot oder dem lotbildenden Metall oder Stoff. Unterhalb einer Lotmetall-Liquidustemperatur von 450°C spricht man definitionsgemäß vom Weichlöten (= "soldering"), darüber hinaus vom Hartlöten (= "brazing"). Es gibt niedrigschmelzende Lote, wie z. B. Zink-Aluminium-Lote, die bereits ab 390°C oder reines Zink-Lot, das bereits ab 420°C zum Verlöten verwendet werden kann. Andere Lote können bei höherer Temperatur verlötet werden. Al-Si-[Cu]-Lote kann man ab [530°C] bzw. 577°C verwenden.

Im allgemeinen reicht eine Lottemperatur von 600°C aus. Bevorzugt lötet man bei 390°C bis 600°C, insbesondere bei 420 bis 590°C. Dabei herrscht Umgebungsdruck. Ein Löten, z. B. im Vakuum, unter Verdampfen des Flussmittels, wie in der JP-A 03/099795 beschrieben, ist ebenfalls möglich. Man kann Flammen- oder Ofenlöten, insbesondere in inerter Atmosphäre (z. B. $N_2$-Atmosphäre).

**Beispiel 1:**

Feinteiliges Produkt (nicht erfindungsgemäß)

$$\text{Reaktion: } KOH + ZnO + 3\,HF \rightarrow KZnF_3 + 2H_2O$$

Ansatz :

| | | | |
|---|---|---|---|
| 1) | 0,5 ml | KOH-Lösung 45,2 % w.w. | 62,3 g |
| | | ZnO (99,9 cm Aldrich) | 40,9 g |
| | | Vollentsalztes Wasser (VE-Wasser) | 30,6 ml |
| 2) | | HF-Lösung 49,6 % w.w. | 60,6 g |
| | | VE-Wasser | 60,6 ml |
| | | Kühl-VE-Wasser | 33 ml |

Durchführung:

62,3 g der 45,2%igen KOH w.w. wurden mit 30,6 ml VE-Wasser verdünnt und anschließend 40,9 g ZnO zugegeben und unter Rühren angeschlämmt. Aus einem Tropftrichter wurden dann binnen 90 sec. eine HF-Lösung aus 60,6 g der 49,6%igen HF-Lösung und 60,6 g VE-Wasser eingebracht. Die Temperatur stieg von 24,6°C auf 85,9°C an. Zur Kühlung wurden 33 ml VE-Wasser zugefügt. Eine Stunde lang wurde dann bei 80°C gerührt, der Niederschlag abfiltriert und vier Stunden bei 180°C getrocknet. Ausbeute: quantitativ

$$XRD = KZnF_3$$

$$\text{Korngröße (Laserbeugung) :} \quad x_{50} = 3{,}28\,\mu m$$
$$x_{90} = 6{,}98\,\mu m$$

**Beispiel 2:**

Mittelfeines Produkt

Herstellung wie Beispiel 1, wobei jedoch Ansatz 1 durch Umsetzung von HF-Lösung mit Zinkoxid hergestellt wird, Ansatz 2 die KOH-Lösung ist.

$$\text{Korngröße} \quad x_{50} = 9{,}47 \ \mu m$$
$$x_{90} = 25{,}75 \ \mu m$$

**Beispiel 3:**

Grobteiliges Produkt (nicht erfindungsgemäß)

Herstellung wie in Beispiel 1, wobei jedoch Ansatz 1 durch Umsetzung von HF-Lösung mit Zinkoxid hergestellt wird, Ansatz 2 eine Lösung aus KF in Wasser ist.
Korngröße $x_{50}$ = 20,50 $\mu m$
Korngröße $x_{90}$ = 38,18 $\mu m$

**Beispiel 4:**

Anwendung zum Löten (nicht erfindungsgemäß)

Eine Verreibung von 3 g der Substanz aus Beispiel 1 mit Isopropanol wurde auf ein 25x25 mm AlSi-Lot plattiertem Aluminiumblech aufgebracht und mit einem Aluminiumwinkel belegt. Dieses Ensemble wurde in einem Laborlötofen nach den Nocolok®-Lötprozessbedingungen thermisch behandelt. Die Verlötung des Ensembles war 100 %.

**Patentansprüche**

1. Verfahren zur Herstellung von Alkalimetallfluorzinkat aus Alkalimetallhydroxid, Zinkoxid und Alkalimetallfluorid oder Fluorwasserstoff in wäßriger Phase, **dadurch gekennzeichnet, dass** man zur Herstellung von mittelfeinem Alkalimetallfluorzinkat mit einem Kornspektrum, bei welchem 50 % der Teilchen einen Durchmesser von <11 $\mu m$ aufweisen, Fluorwasserstoff und Zinkoxid miteinander vermischt und Alkalimetallhydroxid zugibt

2. Verfahren nach Anspruch 1, **dadurch gekennzeichnet, dass** man Kaliumfluorzinkat herstellt und von Kaliumhydroxid ausgeht.

3. Verfahren nach Anspruch 1, **dadurch gekennzeichnet, dass** man das Kaliumhydroxid als wäßrige Kalilauge einsetzt.

4. Verfahren nach Anspruch 1, **dadurch gekennzeichnet, dass** das Atomverhältnis von K:Zn im Bereich von 1:1 $\pm 0{,}05$ liegt und das Atomverhältnis von (K + Zn):F im Bereich von 1:3 $\pm 0{,}05$.

5. Verfahren nach Anspruch 1, **dadurch gekennzeichnet, dass** man das gebildete Alkalimetallfluorzinkat abtrennt und trocknet.

6. Mittelfeines Alkalimetallfluorzinkat, erhältlich gemäß Anspruch 1, mit einem Kornspektrum, bei welchem 50 % der Teilchen einen Durchmesser von <11 $\mu m$ aufweisen.

7. Verwendung des Alkalimetallfluorzinkats nach Anspruch 6 als Lötflußmittel oder als Lötflußmittelzusatz beim Aluminiumlöten,

8. Verwendung des mittelfeinen Alkalimetallfluorzinkats nach Anspruch 7 für die elektrostatische Aufbringung (Trockenbefluxen).

9. Verwendung des mittelfeinen Alkalimetallfluorzinkats nach Anspruch 7 für die elektrostatische Aufbringung beim Naßbefluxen.

**Claims**

1. Process for the preparation of an alkali metal fluorozincate from an alkali metal hydroxide, zinc oxide and an alkali metal fluoride or hydrogen fluoride in the aqueous phase, **characterized in that**, for the preparation of medium-fine alkali metal fluorozincate having a particle spectrum in which 50% of the particles have a diameter of < 11 $\mu$m, hydrogen fluoride and zinc oxide are mixed with one another and an alkali metal hydroxide is added.

2. Process according to Claim 1, **characterized in that** potassium fluorozincate is prepared and potassium hydroxide is used as starting material.

3. Process according to Claim 1, **characterized in that** the potassium hydroxide is used as aqueous potassium hydroxide solution.

4. Process according to Claim 1, **characterized in that** the atomic ratio of K:Zn is in the range of 1:1 $\pm$ 0.05 and the atomic ratio of (K+Zn):F is in the range of 1:3 $\pm$ 0.05.

5. Process according to Claim 1, **characterized in that** the alkali metal fluorozincate formed is separated off and dried.

6. Medium-fine alkali metal fluorozincate obtainable according to Claim 1, having a particle spectrum in which 50% of the particles have a diameter of < 11 $\mu$m.

7. Use of the alkali metal fluorozincate according to Claim 6 as a soldering flux or as a soldering flux additive in the soldering of aluminium.

8. Use of the medium-fine alkali metal fluorozincate according to Claim 7 for electrostatic application (dry fluxing).

9. Use of the medium-fine alkali metal fluorozincate according to Claim 7 for electrostatic application in wet fluxing.


**Revendications**

1. Procédé pour la préparation de fluorozincate de métal alcalin à partir d'un hydroxyde de métal alcalin, d'oxyde de zinc et d'un fluorure de métal alcalin ou de fluorure d'hydrogène en phase aqueuse, **caractérisé en ce que** pour la préparation d'un fluorozincate de métal alcalin moyennement fin ayant une distribution granulométrique dans laquelle 50 % des particules présentent un diamètre de <11 $\mu$m, on mélange l'un avec l'autre du fluorure d'hydrogène et de l'oxyde de zinc et on ajoute un hydroxyde de métal alcalin.

2. Procédé selon la revendication 1, **caractérisé en ce qu'**on prépare du fluorozincate de potassium et on part d'hydroxyde de potassium.

3. Procédé selon la revendication 1, **caractérisé en ce qu'**on utilise l'hydroxyde de potassium sous forme de solution aqueuse d'hydroxyde de potassium.

4. Procédé selon la revendication 1, **caractérisé en ce que** le rapport atomique K:Zn se situe dans la plage de 1:1 $\pm$ 0,05 et le rapport atomique
(K + Zn):F se situe dans la plage de 1:3 $\pm$ 0,05.

5. Procédé selon la revendication 1, **caractérisé en ce qu'**on sépare le fluorozincate de métal alcalin formé et on le sèche.

6. Fluorozincate de métal alcalin moyennement fin, pouvant être obtenu selon la revendication 1, ayant une distribution granulométrique dans laquelle 50 % des particules présentent un diamètre de <11 $\mu$m.

7. Utilisation du fluorozincate de métal alcalin selon la revendication 6, en tant que fondant de brasage ou en tant qu'additif à un fondant de brasage dans le brasage de l'aluminium.

8. Utilisation du fluorozincate de métal alcalin moyennement fin selon la revendication 7, pour l'application électrostatique (fluxage à sec).

9. Utilisation du fluorozincate de métal alcalin moyennement fin selon la revendication 7, pour l'application électrostatique dans le fluxage par voie humide.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9948641 A
- DE 19913111 A1
- DE 19913111
- EP 810057 A
- DE OS19636897 A
- US 5190596 A
- DE OS19913111 A
- JP 3099795 A